# FASCICULE DE BREVET EUROPEEN

(11) **EP 2 921 045 B1**
(45) Date de publication et mention de la délivrance du brevet: **07.11.2018**
(21) Numéro de dépôt: 15382057.6
(22) Date de dépôt: 12.02.2015
(51) Int. Cl.: A01G 17/14

(54) **Piquet de vigne avec un nouveau système pour soutenir les fils de fer**
Rebpfahl mit einem neuen System zum Stützen der Eisendrähte
Vine post with a novel system for supporting the iron wires

(30) Priorité: 21.03.2014 ES 201430400; 26.11.2014 ES 201431755
(43) Date de publication de la demande: 23.09.2015
(73) Titulaire: Perfiles de Precision, S.L., 31195 Berrioplano Navarra (ES)
(72) Inventeur: Zubillaga Baigorri, Fernando, 31195 Berrioplano (Navarra) (ES)
(74) Mandataire: Pons

(56) Documents cités:
- EP-A1- 1 340 422
- EP-A1- 1 661 451
- EP-A1- 2 002 708
- EP-A1- 2 111 745
- EP-A2- 1 232 684
- EP-B1- 0 819 377
- EP-B1- 1 103 177
- EP-B1- 1 716 301
- DE-A1-102004 011 778
- US-A- 2 011 716

## Description

### Objet de l'invention

L'objet de l'invention fait référence à un piquet de vigne avec un nouveau système pour soutenir les fils de fer.

### Antécédents de l'invention

Dans l'état actuel de la technique, et dans la technologie plus ancienne, dans le domaine agricole/vinicole, les piquets pour soutenir les fils de fer qui soutiennent les plantes sont déjà connus. Des piquets de ce type sont décrits, par exemple et entre autres, dans les documents de brevet CH620568, DE3114759 et FR1338991 (lesquels font partie d'une technologie ancienne de plus de 30 ans).

Configurer les crochets dans les piquets pour soutenir sur ces derniers les fils de fer présente des problèmes. Soutenir les fils de fer « in situ » sur ces crochets rapidement et en toute sécurité présente aussi des problèmes. Simplifier la structure des piquets pour optimiser leur fabrication en série présente aussi des problèmes.

Dans l'actuel état de la technique, il existe de nombreuses manières tant de configurer les piquets que de configurer les crochets sur les piquets. Il existe aussi de nombreux types de crochets et même de nombreux types de piquets; en partant toujours du concept générique de découper, insérer ou incorporer dans le corps métallique du piquet une pluralité de « crochets » (obtenus du matériel du piquet même ou non) dans lesquels il s'avère plus ou moins facile/rapide de soutenir les fils de fer pour essayer d'effectuer cette opération « in situ » dans les plus brefs délais et sans requérir de main-d'oeuvre qualifiée, en utilisant un nombre réduit de composants étrangers au piquet même (ou directement sans utiliser aucun composant étranger au piquet même) et toujours en maintenant l'idée que le crochet résultant est fiable. Les solutions connues, qui font partie de l'état de la technique, peuvent être regroupées en plusieurs types
a) Les solutions pourvues de crochets en position fermée, obtenus par déformation du matériel du piquet même ; dans lesquels sont « enfilés » les fils de fer (le document FR1353918 est un exemple clair de cette technologie). Un problème évident de cette solution est la difficulté pour monter le fil de fer, particulièrement dans le cas de poses de taille importante.
b) Les solutions pourvues de crochets en position ouverte, obtenus par déformation du matériel du piquet même ; dans lesquels sont « soutenus » les fils de fer (les documents DE4436936 , EP1232684 , DE8412856 , ES1042584 et ES1045205 sont des exemples clairs de cette technologie). Un problème évident de ces solutions est que le fil de fer après le montage n'est pas fixé, ce pourquoi il se détache facilement, tant volontairement (par des actions de vandalisme) que même involontairement (par l'action du vent, par exemple). Une variante plus problématique de cette technologie est celle décrite dans le brevet FR1380669 , où le crochet en position ouverte est une pièce indépendante, soudée au corps du piquet (ce qui requiert une soudure à l'origine et des pièces supplémentaires et indépendantes du piquet même). Des variantes de ces solutions pourvues de crochets en position ouverte qui essayent d'éviter la problématique mentionnée sont celles décrites, par exemple, dans les documents de brevet EP0819377 , FR2784005 , DE19629023, DE19652597, WO200508699, DE102004007470 ou EP1661451 qui essaient, de manière plus ou moins complexe, de monter facilement le fil de fer dans le crochet et l'y retenir, en évitant qu'il ne se décolle accidentellement/involontairement. Chacune des solutions décrites dans ces documents de brevet requiert ou une mise en forme complexe de cet onglet, ou bien une déformation « in situ » de l'onglet après avoir installé le fil de fer.

### Description de l'invention

L'objet de l'invention résout ces problèmes de retenue du fil de fer pour éviter qu'il se décolle involontairement/accidentellement avec une mécanisation plus simple et rapide à exécuter qui, en outre, ne requiert aucune conformation complexe dans l'onglet ni de déformation plastique « in situ » de celle-ci après avoir ajusté le fil de fer, tout cela aboutissant sur une simplification de la structure des piquets qui optimise sa fabrication en série. Lesdits problèmes de retenue sont résolu par un piquet de vigne selon la revendication indépendante 1. Des modes de réalisation plus détaillés sont définis dans les revendications dépendantes 2 à 13.

Le piquet de vigne, avec son nouveau système pour soutenir les fils de fer, conformément à l'invention, fait partie de ceux structurés en un corps métallique allongé qui définit une pluralité de crochets obtenus par le découpage et la déformation de portions qui dépassent par rapport au corps du piquet et qui y forment des fenêtres correspondantes. Il se caractérise par le fait qu'il comporte des moyens pour retenir le fil en évitant qu'il ne se décolle involontairement/accidentellement, ces moyens étant une ou plusieurs protubérances pour chaque portion/crochet ; ces protubérances étant réalisées dans le corps métallique du piquet et disposées dans la zone de découpe de ces fenêtres ; de sorte que, après avoir inséré le fil de fer par simple clipage, les protubérances qui émergent sur les côtés de la portion/crochet correspondant le retiennent par une simple butée pour éviter leur décollement involontaire/accidentel et, simultanément, faciliter leur mise en place et/ou leur extraction, quand celles-ci sont effectuées volontairement, en forçant une petite trajectoire non droite.

Toutes les réalisations incluant ce concept basique sont incluses dans l'objet de l'invention; et en particulier :
- disposer une protubérance insérée dans un côté de la fenêtre correspondante de sorte qu'elle émerge dans un côté de la portion/crochet correspondant; ou
- disposer des protubérances insérées dans les deux côtés de la fenêtre correspondante de sorte qu'elles émergent dans les deux côtés de la portion/crochet correspondant; et/ou
- disposer les portions/crochets dans toute orientation par rapport au corps du piquet, et/ou
- que les protubérances insérées émergent latéralement plus loin, plus près, ou restent à la même hauteur que la portion/crochet correspondant découpé du corps du piquet.

Dans tout les cas, pour le piquet de vigne pourvu de ce système pour soutenir les fils de fer, conformément à l'invention, le fil de fer, après l'avoir inséré par simple clipage dans sa position opérationnelle, est retenu par une simple butée contre les protubérances qui émergent du côté de la portion/crochet correspondant, en évitant ainsi qu'il se décolle involontairement/accidentellement et, simultanément, l'on facilite sa mise en place et/ou son extraction, quand celles-ci sont effectuées volontairement, en forçant une petite trajectoire non droite.

En partant de la nouvelle structuration mentionnée, pour résoudre les problèmes de résistance et éviter le décollement involontaire/accidentel avec une mécanisation encore plus simple, efficace et rapide à exécuter, dans une réalisation alternative:
- les portions/crochets sont maintenant différents, pour intégrer eux-mêmes les fonctions de retenue du fil qu'exerçaient les protubérances réalisées sur un ou sur les deux côtés de ceux-ci;
- le corps du piquet inclut maintenant, au moins, un nerf supplémentaire dans, au moins, une de ses ailes pour offrir une plus grande rigidité/résistance au moment de le clouer;

Le support inférieur utilisé pour ranger les fils de fer avant de les monter (ou après les avoir démontés) dans les portions/crochet du piquet, dans la réalisation principale était constitué dans chaque piquet par une première portion/crochet inférieur, semblable aux autres et en position inversée. Dans la réalisation alternative, ce support est constitué deux par des coudes opposées, comme des onglets se faisant face.

D'autres configurations et avantages de l'invention peuvent être déduits à partir de la description suivante, et des revendications dépendantes.

### Description des dessins

Dans le but de mieux comprendre l'objet de l'invention, sur les figures jointes est représentée une forme préférentielle de réalisation, susceptible de changements accessoires ne dénaturant pas son fondement. Dans ce cas:
La figure 1a représente une coupe générale d'un piquet de vigne avec son nouveau système pour soutenir les fils de fer, pour un exemple de réalisation.
La figure 1b représente une coupe générale semblable à la figure 1a , qui inclut des portions/crochets (11) dans différentes orientations.
La figure 2a représente une vue général de profil, correspondante à la figure 1a.
La figure 2b représente une vue général de profil, correspondant à la figure 1b.
La figure 3a représente un détail augmenté, selon l'indication (A) de la figure 1a, dans laquelle on a représenté le fil de fer(2) dans sa position opérationnelle.
La figure 3b représente un détail augmenté, selon l'indication (B) de la figure 1b, dans laquelle on a représenté le fil de fer (2) dans sa position opérationnelle.
La figure 3c représente un détail augmenté, selon l'indication (C) de la figure 2a .
La figure 4 représente, en détail, une vue en plan correspondante à la figure 2a .
La figure 5a représente une coupe générale d'un piquet de vigne avec son nouveau système pour soutenir les fils de fer, conforme à l'invention, pour un autre exemple de réalisation.
La figure 5b représente une coupe générale semblable à la figure 5a , qui inclut des portions/crochets (11) dans différentes orientations.
La figure 6a représente une vue général de profil, correspondante à la figure 5a .
La figure 6b représente une vue général de profil, correspondante à la figure 5b .
La figure 7 représente un détail, selon l'indication (D) de la figure 6a .
La figure 8 représente, en détail, une vue en plan correspondante à la figure 6a .
La figure 9 représente une vue générale d'un piquet de vigne avec son nouveau système pour soutenir les fils de fer, conforme au présent ajout, pour un exemple de réalisation alternative.
La figure 10 représente une vue général de profil, correspondante à la figure 9 .
La figure 11 a représente, en détail, selon l'indication (A') de la figure 9 , un exemple de réalisation de la portion-crochet (11). Dans cette figure, le fil de fer (2) a été représenté dans sa position opérationnelle.
La figure 11b représente une vue latérale extérieure correspondante à la figure 11 a.
La figure 11c représente une vue latérale intérieure correspondante à la figure 11 a.
La figure 12a représente, en détail, selon l'indication (A') de la figure 9, une réalisation de la portion-crochet (11) conforme à l'invention.
La figure 12b représente une vue latérale extérieure correspondante à la figure 12a .
La figure 12c représente une vue latérale intérieure correspondante à la figure 12a .
La figure 13 représente une vue en plan augmentée correspondante à la figure 10 , pour une réalisation dans laquelle le corps du piquet (1) présente une configuration en « U ».
La figure 14 représente une vue en plan augmentée pour une réalisation alternative, dans laquelle le corps du piquet (1) présente une configuration en « L ».

### Description d'une réalisation préférentielle

Ci-dessous est décrit un exemple de réalisation pratique, non limitatif, de la présente invention telle que définie par la revendication indépendante 1. D'autres modes de réalisation dans lesquels sont introduits des changements accessoires ne dénaturant pas son fondement ne sont pas écartés.

L'objet de l'invention fait référence à un piquet de vigne avec un nouveau système pour soutenir les fils de fer.

Le piquet est de ceux structurés en un corps métallique allongé (1) qui définit une pluralité de crochets obtenus par découpe et déformation de portions (11) qui dépassent par rapport au corps du piquet (1) et y créent des fenêtres (12) correspondantes.

Le corps métallique (1) du piquet comporte des moyens pour retenir le fil de fer (2) en évitant qu'il ne se décolle involontairement/accidentellement. Conformément à l'invention, ces moyens sont une ou plusieurs protubérances (13) pour chaque portion/crochet (11); ces protubérances (13) étant réalisées dans le corps métallique (1) et disposées dans la zone de découpe de ces fenêtres (12) de sorte que, après inséré le fil de fer (2) par simple clipage dans la cavité délimitée par la portion/crochet (11) et le corps métallique même (1) du piquet, les protubérances (13) qui dépassent sur les côtés de la portion/crochet (11) correspondante, le retiennent par une simple butée pour éviter qu'ils ne se décollent involontairement/accidentellement et, simultanément, facilitent leur mise en place et/ou leur extraction, quand celles-ci seront effectuées volontairement, en forçant une petite trajectoire non droite.

À partir de ce concept de base, qui est de configurer dans le corps métallique (1) du piquet les moyens pour retenir le fil de fer(2); ces moyens restant sur l'un ou sur les deux côtés de la portion/crochet (11) correspondant, toutes les réalisations ne dénaturant pas le fondement proposé sont incluses dans l'objet de l'invention.

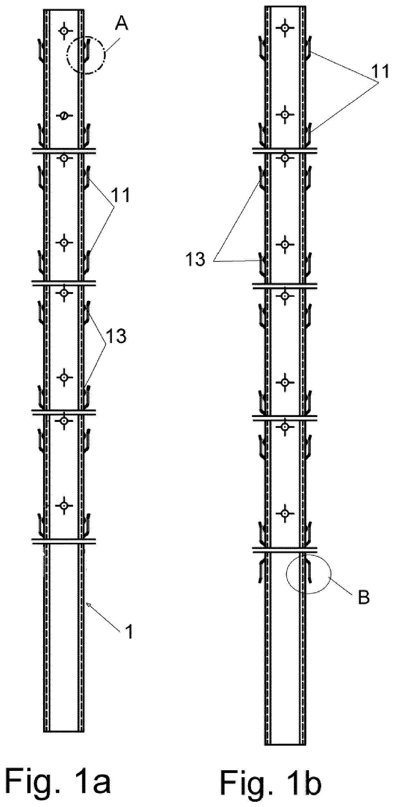

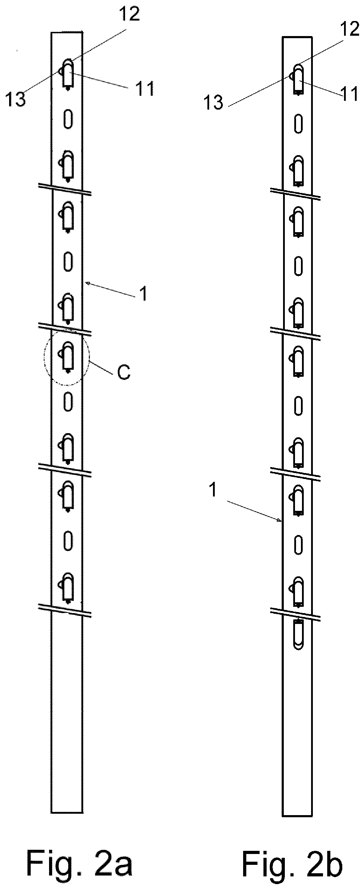

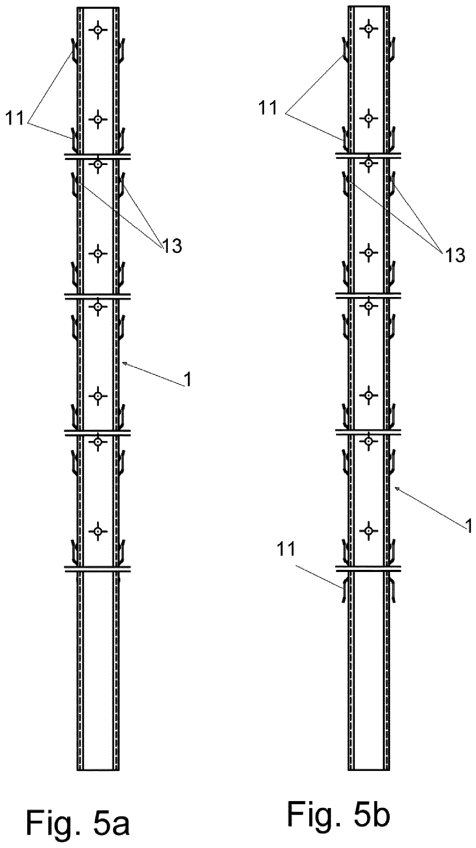

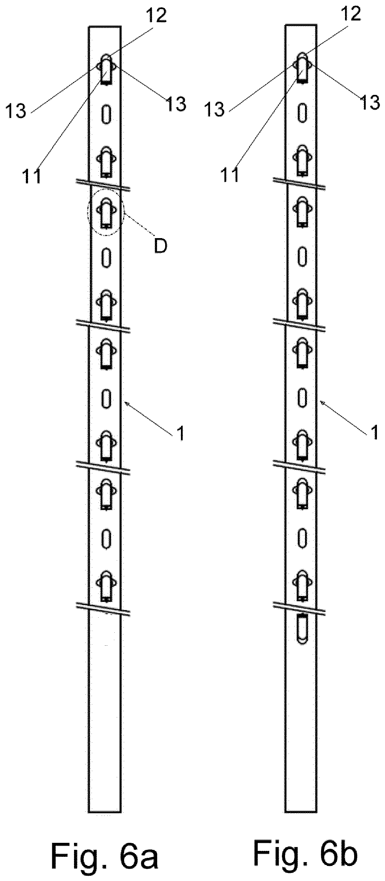

Toute orientation des portions/crochets (11) par rapport au corps métallique (1) du piquet est indistincte, et est incluse dans l'objet de l'invention. De préférence, les portions/crochets (11) sont réalisées et disposées alignées dans la même direction que le piquet, bien que l'on puisse toutes les disposer dans le même sens (comme sur les figures 1 et 2) ou dans les sens opposés (comme sur les figures 5 et 6).

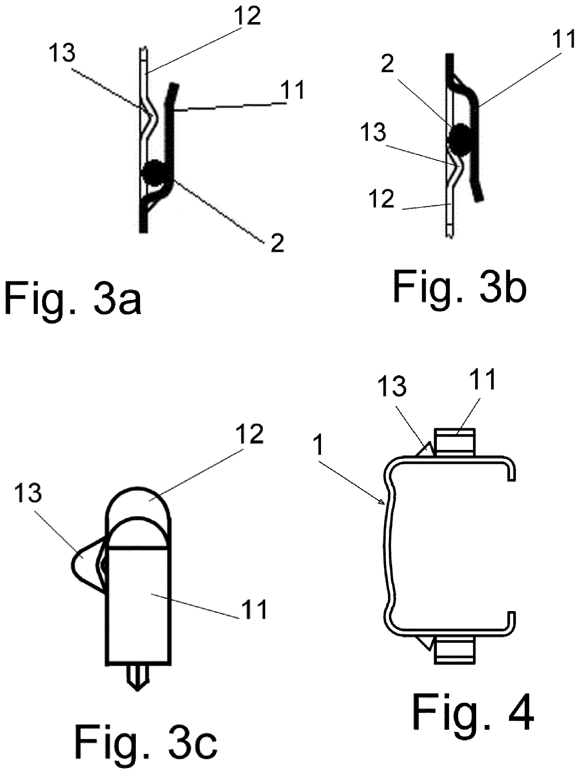

Dans l'exemple de réalisation représenté sur les figures 1 à 4 , l'on dispose une protubérance (13) insérée dans un côté de la fenêtre (12) correspondante - qui apparaît après avoir découpé et déformé la portion/crochet (11) correspondante - de telle sorte que la protubérance (13) dépasse sur un côté de la portion/crochet (11) correspondant. Le fil de fer (2) est retenu/placé à l'endroit défini par le fond (11 a) de la portion/crochet (11) et le corps métallique même (1) du piquet et ne peut pas sortir de cette zone de façon involontaire/accidentelle, car la protubérance (13) insérée dans la zone de découpe de la fenêtre (12) l'en empêche. Voir figure 3a .

Le support inférieur, utilisé pour placer les fils de fer (2) avant de les monter (ou après les avoir démontés) dans les portions/crochets (11) du corps du piquet (1), est constitué par une portion/crochet (11) identique aux autres et située en position inversée. Voir figure 1 b.

Une variation de l'orientation de la portion/crochet (11) par rapport au corps métallique (1) du piquet ne modifie pas le fondement de l'invention. Même si la variation d'orientation était la maximum possible (180°), le fil de fer (2) serait retenu/positionné à l'endroit défini par la paroi (11 b) de la portion/crochet (11) et la protubérance (13), et ne pourrait sortir de cette zone de façon involontaire/accidentelle car la protubérance (13) même insérée dans la zone de découpe de la fenêtre (12) l'en empêcherait. Voir figure 3b.

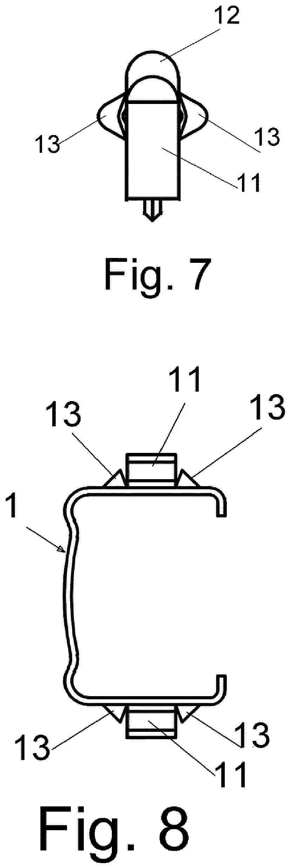

Dans l'exemple de réalisation représenté sur les figures 5 à 8 , l'on dispose des protubérances (13) insérées dans les deux côtés de la fenêtre correspondante (12) - résultante après avoir découpé et déformé la portion/crochet correspondant (11)- de telle sorte que les protubérances (13) dépassent des deux côtés de la portion/crochet correspondant (11). Le fil de fer (2) est retenu/placé dans l'espace défini par le fond (11a) de la portion/crochet (11) et le corps métallique même (1) du piquet et ne peut pas sortir de cette zone de façon involontaire/accidentelle, car les deux protubérances (13) insérées dans les deux côtés de la zone de découpe de la fenêtre (12) l'en empêchent. Voir figure 7.

Le support inférieur, utilisé pour conserver les fils de fer (2) avant de les monter (ou après les avoir démontés) dans les portions/crochet (11) du corps du piquet (1), est constitué par une portion/crochet (11) identique aux autres et située en position inversée. Voir figure 5b.

Une variation de l'orientation de la portion/crochet (11) par rapport au corps métallique (1) du piquet ne modifie par le fondement de l'invention. Même si la variation d'orientation était la maximum possible (180°) -voir figures 5b - et 6b- le fil de fer (2) serait retenu/placé dans l'espace défini par la paroi (11b) de la portion/crochet (11) et les deux protubérances (13) et ne pourrait pas sortir de cette zone de façon involontaire/accidentelle car les protubérances mêmes (13) insérées dans la zone de découpe de la fenêtre (12) l'en empêcheraient.

Il est indifférent, et est inclus dans l'objet de l'invention que, dans chacune des réalisations décrites, les protubérances (13) aient une hauteur inférieure à celles des portions-crochet (11), comme il a été représenté sur les figures 4 et 8 ou que les protubérances (13) aient une hauteur supérieure à celle de la portion-crochet (11), comme il est spécifié dans la revendication 5. Évidemment, et même si cela n'a pas été spécifié explicitement jusqu'à présent, une troisième option possible est incluse entre les deux: que les protubérances (13) aient une hauteur égale à celle de la portion-crochet (11).

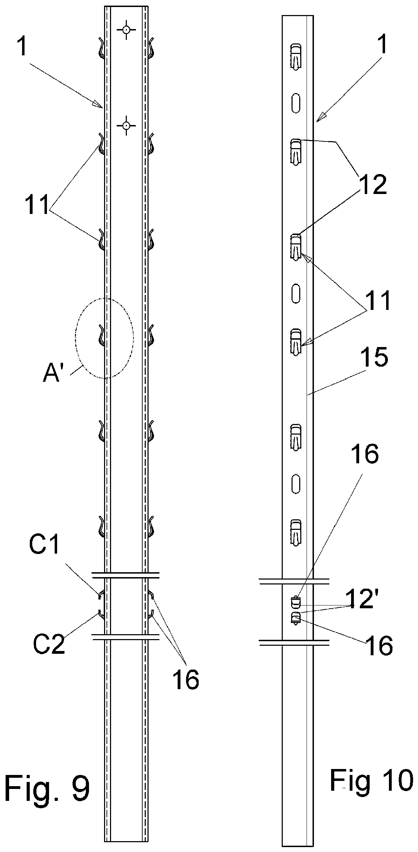

Dans les exemples de réalisation des figures 9 à 14 :
- les protubérances ont été supprimées (13);
- les portions/crochet (11), sont maintenant différentes: plus courtes, plus inclinées et pourvues de façonnages pour exercer les fonctions de fixation/positionnement exercées auparavant par les protubérances (13);
- le corps du piquet (1) inclut maintenant, au moins, un nerf longitudinal supplémentaire (15) dans, au moins, une de ses ailes, pour offrir une plus grande rigidité/résistance au moment de le clouer;
- le support inférieur maintenant se structure en deux coudes opposées, comme des onglets (16) se faisant face, offrant en conjonction avec le corps même du piquet (1) deux caissons (C1), (C2) pour ranger les fils de fer (2) avant de les monter (ou après les avoir démontés) dans les portions/crochet (11) du corps du piquet (1); et
- maintenant les moyens pour éviter que les portions/crochet (11) soient introduites accidentellement vers l'intérieur du corps du piquet (1) à travers la fenêtre correspondante (12) se matérialisent dans, au moins, un emboutissage (14) réalisé dans, au moins, un des bords de la fenêtre (12).

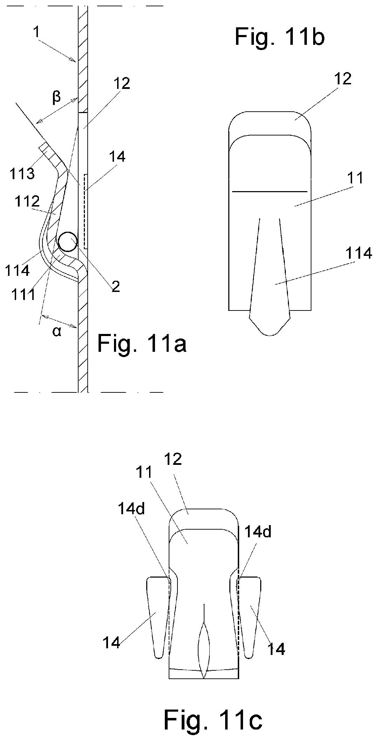

Conformément à l'invention, et selon l'exemple de réalisation représenté sur les figures 11a, 11b et 11c, chaque portion/crochet (11), découpée dans le corps même du piquet (1) en laissant sur celui-ci une fenêtre (12), définit successivement:
- un support (111) en conjonction avec lequel et avec la paroi même du corps du piquet (1) est délimité un logement pour le fil de fer (2);
- une paroi intermédiaire (112) inclinée dans le sens contraire du corps du piquet (1) avec un angle d'inclinaison négative (α); et
- une paroi extrême (113) inclinée dans le sens contraire du corps du piquet (1) avec un angle d'inclinaison positive (β).

Pour cet exemple de réalisation, les angles d'inclinaison (α), (β) sont d'environ 10° et 40° respectivement. La zone de confluence des deux parois (112), (113) présente une génératrice interne arrondie (R) pour ne pas endommager le fil de fer (2), qui est inséré par une déformation élastique de la rainure délimitée entre cette génératrice arrondie (R) et le corps même du piquet (1) en se logeant dans la cavité délimitée par le support (111) et le corps même du piquet (1) sans possibilité de décollement accidentel/involontaire.

En relation avec le dit support (111) de la portion/crochet (11), l'on dispose à l'extérieur une paroi centrée (114), pour renforcer cette zone de la portion/crochet (11).

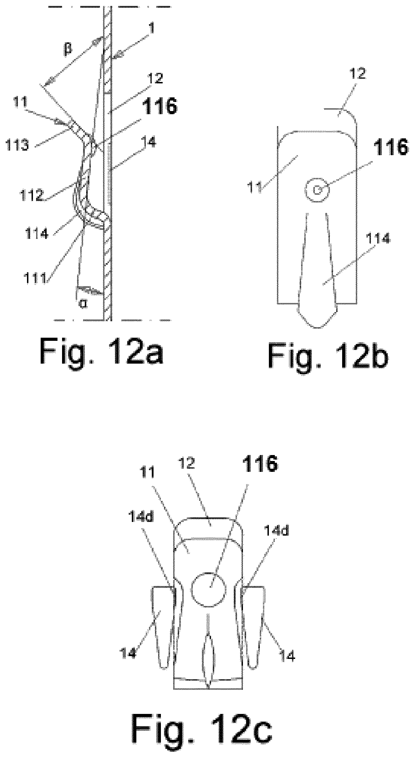

L'exemple conforme à l'invention représenté sur les figures 12a, 12b et 12c est semblable à celui décrit et représenté sur les figures 11a, 11b et 11c ; avec la particularité essentielle à l'invention que, dans la zone de confluence des deux parois (112), (113) l'on a réalisé un emboutissage (116) qui dépasse de la génératrice arrondie (R) vers le corps du piquet (1). L'angle d'inclinaison négative (α) est inférieur (environ 5°), en maintenant l'angle d'inclinaison positive (β) approximativement égal (environ 40°).

En général, et pour chacune des réalisations, tout angle d'inclinaison (α), (β) qui permet de délimiter dans la confluence des parois (112), (113) une génératrice interne (R) exerçant efficacement la fonction de retenir le fil (2) dans sa position opérationnelle est inclus dans l'objet de l'invention.

Conformément à l'invention, et selon la réalisation représentée, les moyens pour éviter que les portions/crochet (11) soient accidentellement introduites vers l'intérieur du corps du piquet (1) à travers la fenêtre (12) correspondante sont constitués, au moins, par un emboutissage (14) réalisé dans, au moins, un des bords de la fenêtre (12) en déformant son périmètre. Avec ces déformations (14d) l'on empêche que la portion/crochet correspondante (11) soit accidentellement introduite dans le corps du piquet (1) à travers la fenêtre (12).

Le support inférieur, utilisé pour ranger les fils de fer (2) avant de les monter (ou après les avoir démontés) dans les portions/crochet (11) du corps du piquet (1), sont constitués par des coudes opposés, comme des onglets (16) se faisant face, en offrant en conjonction avec le corps même du piquet (1) deux caissons (C1), (C2) se faisant face. Ces onglets (16) sont obtenus de manière analogue à la manière d'obtenir les façonnages/crochet (11); c'est-à-dire, en les découpant dans le corps du piquet (1) et en y laissant une fenêtre (12')-voir figure 10-.

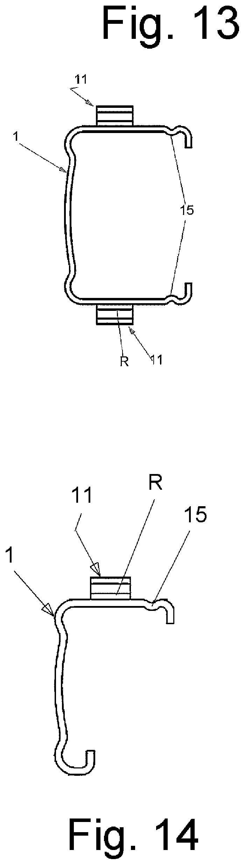

Conformément à l'invention, et selon la réalisation représentée sur la figure 13 , le corps du piquet (1) présente une coupe en forme de « U » ou de « C » et dispose dans chacune de ses ailes latérales, d'au moins un nerf longitudinal (15). Les portions/crochet (11), ainsi que les fenêtres (12) et les moyens (14) pour éviter que les portions/crochet (11) soient accidentellement introduites dans les fenêtres (12), sont disposés dans les deux ailes.

Conformément à l'invention, et selon la réalisation représentée sur la figure 14 , le corps du piquet (1) présente une coupe en forme de « L» et dispose dans une de ses ailes, d'au moins un nerf longitudinal (15). Les portions/crochet (11), ainsi que les fenêtres (12) et les moyens (14) pour éviter que les portions/crochet (11) soient accidentellement introduites dans les fenêtres (12), sont disposés dans cette même aile, l'autre aile exerçant des fonctions équivalentes au fondement de l'exemple de réalisation précédente.

Toute réalisation incluant ces améliorations est incluse dans l'objet de l'invention. En particulier, il est inclus dans l'objet de l'invention:
- configurer un emboutissage (14) dans l'un des côtés de la fenêtre (12) correspondante, de sorte que l'un de ses bords se déforme; ou configurer des emboutissages (14) dans deux côtés opposés de la fenêtre (12) correspondante, de sorte que deux bords opposés soient déformés;
- configurer les portions/crochet (11) centrées sur les ailes latérales du corps du piquet (1); ou configurer les portions/crochet (11) décentrées sur les ailes latérales du corps du piquet (1). Il est indifférent par rapport à l'invention que ces portions/crochet (11) soient centrées (comme dans la figure 13) ou décentrées sur les ailes latérales du corps du piquet (1).

Les matériaux, les dimensions, proportions et, en général, tous les autres détails accessoires ou secondaires n'altérant pas, ne changeant ou ne modifiant pas le fondement proposé pourront être variables.

Les termes dans lesquels est rédigé ce mémoire sont vrais et reflètent fidèlement l'objet décrit, ceux-ci doivent être entendus dans leur sens plus vaste et ceci jamais de manière limitative.

## Revendications

1. Piquet de vigne avec un système pour soutenir les fils de fer, qui, étant du type des piquets structurés en un corps métallique (1) allongé qui définit une pluralité de crochets obtenus par découpe et déformation des portions (11) qui dépassent par rapport au corps du piquet (1) et y créent des fenêtres (12) correspondantes où chacune des portions/crochet (11) est disposée devant la zone de découpe de ces fenêtres (12); où le piquet comporte des moyens pour retenir le fil de fer (2) en évitant qu'il ne se décolle involontairement/accidentellement; où chacune des portions/crochet (11) définit en continuité successive un support (111) qui offre en conjonction avec le corps du piquet (1) une concavité pour loger le fil de fer (2); une paroi intermédiaire (112) inclinée vers le corps du piquet (1) avec un angle d'inclinaison négative (α) ; et une paroi extrême (113) inclinée en s'éloignant du corps du piquet (1) avec un angle d'inclinaison positive (β); en définissant une génératrice interne arrondie (R) dans la confluence des deux parois (112), (113) ; où le piquet est **caractérisé par le fait que**, dans la zone de confluence des deux parois (112), (113) un emboutissage (16) a été réalisé, qui dépasse de la dite génératrice arrondie (R) vers le corps du piquet (1).

2. Piquet de vigne, selon la revendication 1, **caractérisé par le fait que** les dits moyens pour retenir le fil de fer (2) sont une ou plusieurs protubérances (13) pour chaque portion/crochet (11) ; ces protubérances (13) étant réalisées dans le corps métallique (1) et disposées dans la zone de découpe de ces fenêtres (12) de sorte que, après avoir inséré le fil de fer (2) par simple clipage, les protubérances (13) qui émergent sur les côtés de la portion/crochet (11) correspondante le retiennent par une simple butée.

3. Piquet de vigne, selon la revendication 2, **caractérisé par le fait que** l'on dispose une protubérance (13) insérée dans un côté de la fenêtre (12) correspondante et qui dépasse d'un côté de la portion/crochet (11) correspondante.

4. Piquet de vigne, selon la revendication 2, **caractérisé par le fait que** l'on dispose des protubérances (13) insérées dans les deux côtés de la fenêtre (12) correspondante et qui dépassent des deux côtés de la portion/crochet (11) correspondante.

5. Piquet de vigne, selon la revendication 1, **caractérisé par le fait que** le corps du piquet (1) dispose, au moins, d'un nerf longitudinal (15) dans, au moins, une de ses ailes;

6. Piquet de vigne, selon la revendication 1, **caractérisé par le fait qu'**il dispose, au moins, d'un emboutissage (14) par rapport à chaque fenêtre (12) en déformant son périmètre et en empêchant avec cette déformation (14d) que la portion/crochet (11) correspondante soit introduite accidentellement dans le corps du piquet (1);

7. Piquet de vigne, selon la revendication 1, **caractérisé par le fait qu'**il dispose d'un support inférieur, structuré dans deux coudes opposées, comme des onglets (16) se faisant face, qui, en conjonction avec le corps même du piquet (1), délimitent deux caissons (C1), (C2) se faisant face pour retenir les fils de fer (2) avant/après que ceux-ci soient montés/démontés dans les portions/crochet (11).

8. Piquet de vigne, selon la revendication 1, **caractérisé par le fait que**, par rapport au dit support (111) de la portion/crochet (11), l'on dispose à l'extérieur une paroi centrée (114).

9. Piquet de vigne, selon la revendication 1, **caractérisé par le fait que**, le dit angle d'inclinaison négative (α) est, approximativement, de 10°.

10. Piquet de vigne, selon la revendication 1, **caractérisé par le fait que**, le dit angle d'inclinaison négative (α) est, approximativement, de 5°.

11. Piquet de vigne, selon la revendication 1, **caractérisé par le fait que**, le dit angle d'inclinaison positive (β) est, approximativement, de 40°.

12. Piquet de vigne, selon l'une des revendications précédentes, **caractérisé par le fait que** le corps du piquet (1) présente une coupe en forme de « L » et dispose, au moins, d'un nerf longitudinal (15) dans, au moins, une de ses ailes.

13. Piquet de vigne, selon une des revendications 1 à 11, **caractérisé par le fait que** le corps du piquet (1) présente une coupe en forme de « U » ou de « C » et dispose, au moins, d'un nerf longitudinal (15) dans, au moins, une de ses ailes.

## Patentansprüche

1. Rebpfahl mit einem System zum Stützen der Eisendrähte, wobei er vom Typ von Pfählen ist, die in einen länglichen Metallkörper (1) gegliedert sind, der mehrere Haken definiert, die durch Stanzen und Verformung der Teile (11) erhalten wurden, die sich bezüglich des Pfahlkörpers (1) erstrecken und die entsprechende Fenster (12) bilden, wobei jeder der Abschnitte/Haken (11) vor dem Schnittbereich der Fenster (12) angeordnet ist; wobei der Pfahl Mittel zum Zurückhalten des Eisendrahts (2) einschließt, um zu vermeiden, dass er sich ungewollt/versehentlich ablöst; wobei jeder der Abschnitte/Haken (11) in aufeinanderfolgender Fortsetzung eine Stütze (111), die in Verbindung mit dem Pfahlkörper (1) eine Vertiefung bietet, um den Eisendraht (2) aufzunehmen; eine Zwischenwand (112), die gegen den Pfahlkörper (1) mit einem negativen Neigungswinkel (α) geneigt ist; und eine Endwand (113), die mit einem positiven Neigungswinkel (β) vom Pfahlkörper (1) weg geneigt ist, definiert; wobei eine interne runde Mantellinie (R) im Zusammentreffen der zwei Wände (112), (113) definiert wird; wobei der Pfahl **dadurch gekennzeichnet ist, dass** in dem Bereich des Zusammentreffens der zwei Wände (112), (113) eine Tiefung (16) durchgeführt wurde, die sich von der runden Mantellinie (R) in Richtung des Pfahlkörpers (1) erstreckt.

2. Rebpfahl nach Anspruch 1, **dadurch gekennzeichnet, dass** die Mittel zum Zurückhalten des Eisendrahts (2) ein oder mehrere Vorsprünge (13) für jeden Abschnitt/Haken (11) sind; wobei die Vorsprünge (13) in dem Metallkörper (1) ausgeführt sind und in dem Schnittbereich der Fenster (12) liegen, sodass, bevor der Eisendraht (2) durch einfaches Einklipsen eingeführt wird, die Vorsprünge (13), die sich über die Seiten des entsprechenden Abschnitts/Hakens (11) erstrecken, ihn durch einen einfachen Anschlag zurückhalten.

3. Rebpfahl nach Anspruch 2, **dadurch gekennzeichnet, dass** er einen Vorsprung (13) umfasst, der in eine Seite des entsprechenden Fensters (12) eingeführt ist und der sich über eine Seite des entsprechenden Abschnitts/Hakens (11) erstreckt.

4. Rebpfahl nach Anspruch 2, **dadurch gekennzeichnet, dass** er Vorsprünge (13) umfasst, die in die zwei Seiten des entsprechenden Fensters (12) eingeführt sind und die sich über die zwei Seiten des entsprechenden Abschnitts/Hakens (11) erstrecken.

5. Rebpfahl nach Anspruch 1, **dadurch gekennzeichnet, dass** der Pfahlkörper (1) mindestens einen Längsnerv (15) in mindestens einem seiner Flügel umfasst;

6. Rebpfahl nach Anspruch 1, **dadurch gekennzeichnet, dass** er mindestens eine Tiefung (14) bezüglich jedes Fensters (12) umfasst, die seinen Umfang verformt und mit dieser Verformung (14d) verhindert, dass der entsprechende Abschnitt/Haken (11) versehentlich in den Pfahlkörper (1) eingeführt wird;

7. Rebpfahl nach Anspruch 1, **dadurch gekennzeichnet, dass** er eine untere Stütze umfasst, die in zwei entgegengesetzte Bögen gegliedert ist, wie zwei gegenüberliegende Laschen (16), die in Verbindung mit dem Pfahlkörper (1) zwei gegenüberliegende Kästen (C1), (C2) begrenzen, um die Eisendrähte (2) zurückzuhalten, bevor/nachdem diese in die Abschnitte/Haken (11) montiert/demontiert werden.

8. Rebpfahl nach Anspruch 1, **dadurch gekennzeichnet, dass** er bezüglich der Stütze (111) des Abschnitts/Hakens (11) an der Außenseite eine Mittelwand (114) umfasst.

9. Rebpfahl nach Anspruch 1, **dadurch gekennzeichnet, dass** der negative Neigungswinkel (α) etwa 10º ist.

10. Rebpfahl nach Anspruch 1, **dadurch gekennzeichnet, dass** der negative Neigungswinkel (α) etwa 5º ist.

11. Rebpfahl nach Anspruch 1, **dadurch gekennzeichnet, dass** der positive Neigungswinkel (β) etwa 40º ist.

12. Rebpfahl nach einem der vorhergehenden Ansprüche, **dadurch gekennzeichnet, dass** der Pfahlkörper (1) einen Querschnitt in L-Form aufweist und mindestens einen Längsnerv (15) in mindestens einem seiner Flügel umfasst.

13. Rebpfahl nach einem der Ansprüche 1 bis 11, **dadurch gekennzeichnet, dass** der Pfahlkörper (1) einen Querschnitt in U- oder C-Form aufweist und mindestens einen Längsnerv (15) in mindestens einem seiner Flügel umfasst.

## Claims

1. A vine post with a system for supporting the iron wires, which, being of the type of post being structured in an elongated metal body (1) that defines a plurality of hooks obtained by cutting and deforming the portions (11) projecting relative to the body of the post (1) and creating corresponding windows (12) wherein each of the portions/hooks (11) is arranged in front of the cutting area of these windows (12); wherein the post has means for retaining the iron wire (2) preventing it from becoming unintentionally/accidentally detached; wherein each of the portions/hooks (11) defines in successive continuity a support (111) that offers, along with the body of the post (1), a recess for housing the iron wire (2); an intermediate wall (112) tilted towards the body of the post (1) with a negative tilt angle (α); and an end wall (113) tilted away from the body of the post (1) with a positive tilt angle (β); defining a rounded inner generatrix (R) where the two walls (112), (113) meet; wherein the post is **characterised in that**, in the area where the two walls (112), (113) meet, a press-fitting (16) has been carried out, which projects from said rounded generatrix (R) towards the body of the post (1).

2. The vine post according to claim 1, **characterised in that** said means for retaining the iron wire (2) are one or more protuberances (13) for each portion/hook (11); these protuberances (13) being carried out in the metal body (1) and arranged in the cutting area of these windows (12) such that, after having inserted the iron wire (2) by simple clipping, the protuberances (13) that emerge on the sides of the corresponding portion/hook (11) retain it by simple abutment.

3. The vine post according to claim 2, **characterised in that** a protuberance (13) is arranged inserted in one side of the corresponding window (12) and which projects from one side of the corresponding portion/hook (11).

4. The vine post according to claim 2, **characterised in that** protuberances (13) are arranged inserted in the two sides of the corresponding window (12) and which project from the two sides of the corresponding portion/hook (11).

5. The vine post according to claim 1, **characterised in that** the body of the post (1) has at least one longitudinal rib (15) in at least one of the wings thereof;

6. The vine post according to claim 1, **characterised in that** it has at least one press-fitting (14) with respect to each window (12) by deforming the perimeter thereof and preventing, by means of this deformation (14d), the corresponding portion/hook (11) from being accidentally inserted inside the body of the post (1);

7. The vine post according to claim 1, **characterised in that** it has a lower support, structured as two opposing bends, such as tabs (16) that are facing each other, which, along with the body itself of the post (1), delimit two boxes (C1), (C2) facing each other in order to retain the iron wires (2) before/after the same are assembled/disassembled in the portions/hooks (11).

8. The vine post according to claim 1, **characterised in that**, with respect to said support (111) of the portion/hook (11), a centred wall (114) is arranged on the outside.

9. The vine post according to claim 1, **characterised in that** said negative tilt angle (α) is approximately 10°.

10. The vine post according to claim 1, **characterised in that** said negative tilt angle (α) is approximately 5°.

11. The vine post according to claim 1, **characterised in that** said positive tilt angle (β) is approximately 40°.

12. The vine post according to one of the preceding claims, **characterised in that** the body of the post (1) has an L-shaped cross section and has at least one longitudinal rib (15) in at least one of the wings thereof.

13. The vine post according to one of claims 1 to 11, **characterised in that** the body of the post (1) has a U-shaped or C-shaped cross section and has at least one longitudinal rib (15) in at least one of the wings thereof.
